(19) Europäisches Patentamt

European Patent Office

Office européen des brevets

(11) EP 0 595 287 B1

## (12) EUROPÄISCHE PATENTSCHRIFT

(45) Veröffentlichungstag und Bekanntmachung des Hinweises auf die Patenterteilung:
**10.09.1997 Patentblatt 1997/37**

(51) Int. Cl.$^6$: **B29C 53/06**

(21) Anmeldenummer: **93117393.4**

(22) Anmeldetag: **27.10.1993**

(54) **Verfahren zur Herstellung von Winkelhalbzeug aus Verbundplatten**

Process for the production of semi-finished corner units of laminate

Procédé de fabrication de demi-produits angulaires laminés

(84) Benannte Vertragsstaaten:
**AT BE CH DE DK ES FR GB GR IE IT LI NL PT SE**

(30) Priorität: **29.10.1992 DE 4236470**
**04.09.1993 DE 9313350 U**

(43) Veröffentlichungstag der Anmeldung:
**04.05.1994 Patentblatt 1994/18**

(73) Patentinhaber: **Wedi, Helmut**
**D-48282 Emsdetten (DE)**

(72) Erfinder: **Wedi, Helmut**
**D-48282 Emsdetten (DE)**

(74) Vertreter: **Hoffmeister, Helmut, Dr. Dipl.-Phys.**
**Patentanwalt,**
**Postbox 38 28**
**48021 Münster (DE)**

(56) Entgegenhaltungen:
**DE-A- 3 901 237          US-A- 3 360 420**
**US-A- 4 564 547**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein verfahren zur Herstellung von Winkelhalbzeug aus Verbundplatten sowie die Verwendung an sich bekannter und neuer Verbundplatten bei Anwendung eines derartigen Verfahrens.

Es ist bekannt, ein Winkelhalbzeug aus Verbundplatten herzustellen. Hierzu werden Verbundplatten eingesetzt, die einen Schaumstoffkern haben, auf deren wenigstens einer Flachseite ein Glasfasergewebe oder -vlies aufgebracht ist, das in einen erstarrenden Mörtel eingebettet ist. Um allerdings zwei Verbundplatten miteinander verbinden zu können, muß entweder das Glasfasergewebe oder -vlies entfernt werden oder es entsteht eine Verbundstelle, die ein unsauberes Aussehen hat. Darüber hinaus weist die Verbundplatte einen Kantenbereich auf, der nicht armiert ist, so daß die Außenflächen ein unterschiedliches Aussehen und auch unterschiedliche Haftungseigenschaften aufweisen.

Aus der DE 31 36 935 C1 ist eine Bahn oder Platte aus Mineralwolle bekannt. Hierbei werden Mineralfasern nebeneinander aufgeschichtet und mit einer Folie abgedeckt. Auf diese Außenfläche kann ein Putz aufgebracht werden. Nachteilig ist, daß diese Platte zu elastisch und damit zu instabil ist und sich lediglich zum Abisolieren von Dächern oder Wänden eignet.

Weiterhin ist aus der DE 34 44 881 C2 ein schallabsorbierender Gebäudewand- bzw. -Deckenaufbau bekannt, bei dem Mineralfaserplatten und je eine auf den Seiten haftende Schicht Fertigelemente aus einer Mörtelmatrix mit einer Glasfaserbewehrung auf einer tragenden Konstruktion befestigt wird. Nachteilig ist, daß die Mineralfaserplatten nur aus Mineralfasern bestehen und damit zu instabil sind. Die bewehrte Mörtelschicht verhindert ein Auseinanderfallen der Mineralfaserplatte, so daß die Festigkeit mit hohem Aufwand durch eine tragende Konstruktion geschaffen werden muß.

Der Erfindung liegt die Aufgabe zugrunde, ein Verfahren zur Herstellung eines Winkelhalbzeugs aus Verbundplatten zu schaffen, das sich durch hohe Fertigungskapazität und einwandfreie Produkte auszeichnet. Dabei soll es sowohl möglich sein, den Kern als Schaumstoffkern als auch den Kern aus einer oder mehreren Schichten aus Fasern, einschließlich Wolle, Kugeln, Schnitzeln, Streifen, Teilstücken oder dergleichen aus organischen Stoffen und/oder anorganischen Stoffen oder einer ersten Schicht Extruderschaum, einer Schicht aus Fasern, Wolle, Kugeln, Schnitzeln, Streifen, Teilstücken oder dergleichen aus organischen und/oder anorganischen Stoffen und einer zweiten Schicht aus Extruderschaum herzustellen.

Das Verfahren löst die genannte Aufgabenstellung durch folgende Verfahrensschritte:

a) rechteckige Verbundplattenabschnitte der Breite ( B1 + B2 + ... ) werden mittels eines relativ zur Längserstreckung des Verbundplattenabschnittes beweglichen kombinierten Fräs- und Schneidwerkzeuges in Doppelstreifen zu Breiten (B1, B2, ...) geschnitten, wobei gleichzeitig in wenigstens einen der Doppelstreifen eine V-förmige Nut eingebracht wird, deren Nuttiefe die Armierung ausspart und wobei zu beiden Seiten der Nut je ein Verbundplattenstreifen entsteht,

b) anschließendes Durchtrennen (Brechen) des mit der V-förmigen Nut versehenen Doppelstreifens in der Nut unter Beibehaltung einer die Nutspitze überbrückenden Armierung und Aufstellen einer Γ-Konfiguration aus den beiden Plattenstreifen, wobei die Nutinnenseiten Gehrungsflächen werden,

c) Einbringen eines flüssigen Heißklebers in den Raum zwischen die Nutinnenseiten,

d) Abkühlenlassen des Klebers und Entnehmen des fertigen Halbzeugs.

In der DE-A-3901237 wird ein Verfahren zur Herstellung eines Winkelhalbzeugs aus Verbundplatten beschrieben. Die Verwendung von mörtelbeschichteten Platten wird jedoch nicht angedeutet.

Die mit der Erfindung erzielten Vorteile bestehen insbesondere darin, daß durch das Einbringen einer Nut exakt in die Grenzschicht zwischen Kern und äußerer armierter Mörtelschicht die Möglichkeit gegeben ist, die ausgehärtete Mörtelschicht zu brechen und nach dem Verbinden der Innenseiten der V-förmigen Nut ein Winkelhalbzeug zu erhalten, das über eine durchgängig armierte gleichmäßige äußere Oberfläche verfügt. Durch die durchgehende äußere armierte Mörtelschicht ist die Möglichkeit gegeben, diese entweder abzuputzen, mit Fliesen zu belegen, zu tapezieren oder sonstwie zu bearbeiten, ohne daß das Winkelhalbzeug über unterschiedliche äußere Strukturen verfügt.

Vorteilhaft ist es, wenn eine verdichtete Schicht aus Fasern, Wolle, Kugeln, Schnitzeln, Streifen, Teilstücken oder dergleichen aus organischen und/oder anorganischen Stoffen, z.B. Mineralfasern und/oder Wolle, verwendet wird. Als Mineralfasern kommen dabei zum Einsatz Steinwolle, Glaswolle und dergleichen. Die Mineralfasern können dabei entweder parallel nebeneinanderliegend in einem Winkel von 10 - 80° zur Plattenebene geneigt sein oder wollartig nebeneinander- und übereinanderliegen. Durch die Verdichtung der Faserschicht und/oder Wollschicht ist es möglich, einen Kern herzustellen, der über eine exakte Abmessung verfügt.

Vorteilhaft ist es, wenn die Schicht aus Fasern, Wolle, Kugeln, Schnitzeln, Streifen, Teilstücken oder dergleichen aus organischen und/oder anorganischen Stoffen, z.B. Mineralfasern, mit Extruderschaum so beschichtet wird, daß sich der Extruderschaum mit den Fasern, Wolle, Kugeln, Schnitzeln, Streifen, Teilstücken oder dergleichen aus organischen und/oder anorganischen Stoffen durchsetzt. Hierdurch werden die hohen Festigkeitseigenschaften, über die der ausgehärtete Extruderschaum verfügt, und die hervorragenden schall- und wärmeisolierenden Eigenschaften der Schicht verbunden. Dies wird noch dadurch erhöht, daß die Fasern/Wolle und dergleichen sich mit dem Extruderschaum vermischen und so eine sehr innige Verbindung aller Schichten gewährleistet ist.

Durch das gleichzeitige Fräsen und Schneiden der Verbundplatten können im Bereich eines Vorschubs mehrere Winkelzeuge gleichzeitig hergestellt werden. Durch die Überbrückung der eingefrästen Nutspitze durch die Armierung bleiben die beiden Verbundplattenabschnitte miteinander in Verbindung und können so einfacher gehandhabt werden. Durch Verwendung eines Heißklebers kann die Klebstelle in kurzer Zeit fertiggestellt werden; Lösungsmitteldämpfe fallen nicht an. Hierdurch werden insbesondere die Investitionskosten vermindert.

Die beiden Verbundplatten-Streifen können in beliebigen Winkeln verbunden werden; vorzugsweise sind sie jedoch in einem Winkel von 90° verbunden; das bedeutet, daß die V-Nut einen Öffnungswinkel von 90° haben muß.

Grundsätzlich ist es möglich, die Verbundplattenabschnitte relativ zum feststehenden Fräs- und Sägewerkzeug zu fördern oder aber das Fräs- und Sägewerkzeug relativ zur Längserstreckung des Verbundplattenabschnitts zu bewegen Da die erstgenannte Ausführungsform ein genaueres Arbeiten erlaubt, wird ihr der Vorzug gegeben.

Vorzugsweise wird der Winkelhalbzeug-Rohling nach dem Auftrag des Werkstoffs entlang einer Förderstrecke mit Kühlluft angeblasen, so daß der Rohling bis zur Fertigstellung die Förderstrecke nicht mehr verlassen muß.

Zum Aufstellen der Winkelkonfiguration wird ein ansteuerbarer Anschlag aus der Förderebene ausgeklappt.

Dieser Anschlag wirkt vorzugsweise mit einer Fühlvorrichtung zusammen, die nach vollständigem Durchlauf des Verbundplattenabschnitts durch die Fräs- und Sägevorrichtung ein Aufstellen des Anschlags auslöst.

Um verschiedene Breiten herstellen zu können, wird vorgeschlagen, die Fräs- und Sägevorrichtung über die Breite des Verbundplattenabschnitts verstellbar zu machen.

Die Möglichkeit ist gegeben, das im erfindungsgemäßen Verfahren hergestellte Halbzeug zur Herstellung von Rohrkästen und geschlossenen Hohlprofilen zu verwenden. Die Möglichkeit der Variation des Öffnungswinkels in dem angegebenen breiten Bereich eröffnet darüber hinaus die Möglichkeit, künstliche Wände bzw. Verschalungen in geometrisch schwierigen Räumen, wie sie insbesondere bei unter Denkmalschutz stehenden Häusern, Patrizierhäusern und dergleichen vorhanden sind, vornehmen zu können. Die vor der eigentlichen, an sich beschädigten Wand liegende zweite Wand aus einem Winkelhalbzeug gibt die Möglichkeit, zum einen die beschädigte Wand zu verdecken und zum anderen in dem sich dazwischen ergebenden Raum Versorgungsleitungen, wie z. B. Abwassertungen, Frischwasserleitungen, Starkstromversorgungsleitungen, Telefonleitungen und dergleichen zu verlegen.

Durch die schall- und wärmeisolierenden Eigenschaften der Verbundplatte ist es möglich, die einzelnen Versorgungsleitungen darüber hinaus entsprechend den bestehenden Vorschriften sicher zu trennen und dem Besucher der historischen Räume bzw. dem Bewohner eines solchen Objekts ihre Existenz sowohl optisch als auch akustisch sowie wärmetechnisch zu verbergen.

In der Zeichnung ist der Erfindungsgegenstand dargestellt. Es zeigen:

Figur 1 einen Verbundplattenabschnitt,

Figur 2 den geschnittenen und eingefrästen Verbundplattenabschnitt,

Figur 3 die in einer Winkelkonfiguration geklappten Streifen,

Figur 4a einen Verbundplattenabschnitt mit einem Kernelement gemäß Figur 1 in einer schematischen Seitenansicht,

Figur 4b einen Verbundplattenabschnitt mit einem Schaumfaserkern gemäß Figur 1 in einer schematischen Seitenansicht,

Figur 5a eine Fertigungslinie zur Herstellung eines Kernelementes für einen Verbundplattenabschnitt gemäß Figur 1 und 4,

Figur 5b eine weitere Fertigungsmöglichkeit für die Herstellung eines Kernelementes für eine Verbundplatte gemäß Figur 1 und 4 und

Figur 6 eine Fertigungslinie zur Herstellung eines Winkelhalbzeugs aus Verbundplatten gemäß Figur 1, 4a und 4b.

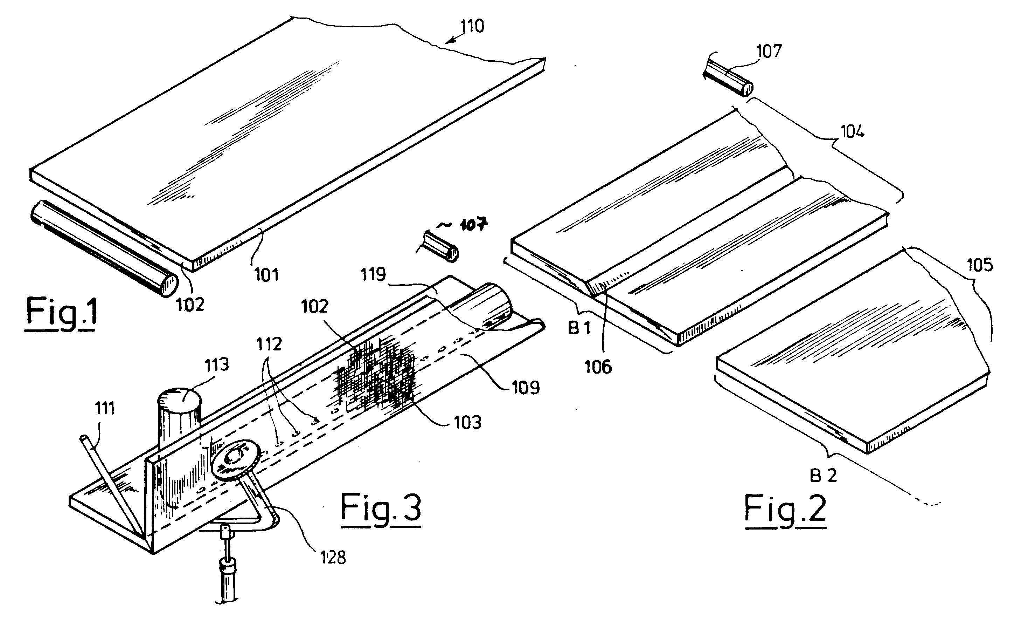

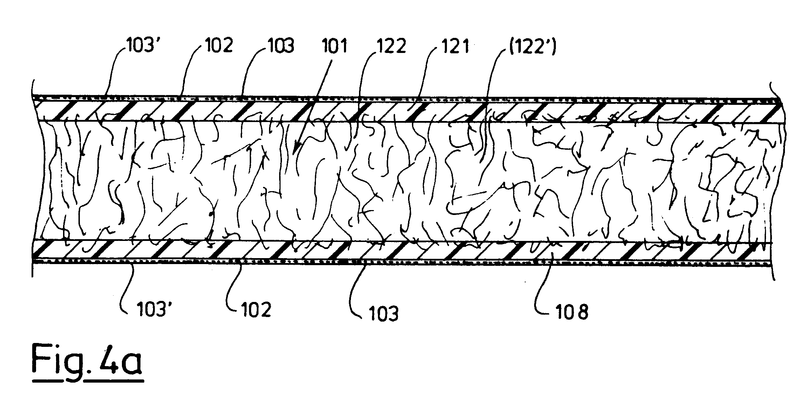

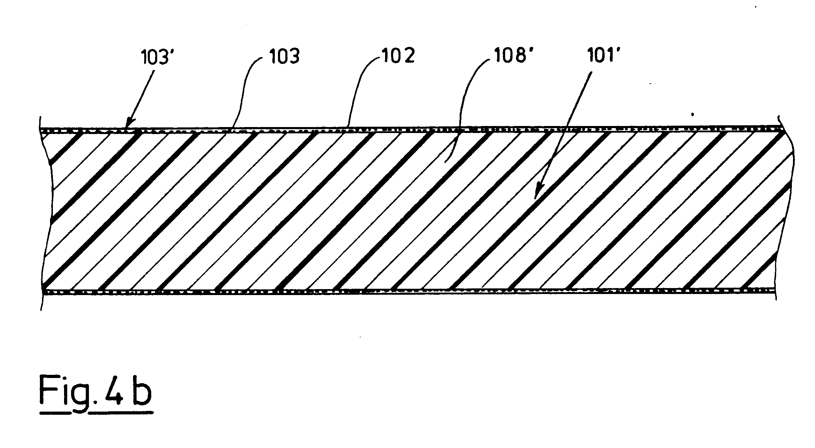

Ein Verbundplattenabschnitt 110, der aus einer größeren Verbundplatte zugeschnitten ist, für eine Herstellung eines Winkelhalbzeugs, ist in den Figuren 1, 4a und 4b dargestellt. Die Verbundplatte bzw. der Verbundplattenabschnitt besitzt ein Kernelement 101 aus Faser oder aus Schaumstoff.

Das Kernelement 101 kann entweder nur eine Lage Mineralfasern 122 und/oder Wolle 122' aufweisen oder eine Lage Mineralfasern 122 und/oder Wolle 122', die wenigstens mit einer Lage Extruderschaum 108 bzw. 121, wie Figur 4a zeigt, belegt ist.

Bei der gemäß Figur 4b dargestellten Verbundplatte 110 besteht der Schaumstoffkern 101' aus einer Schicht Polystyrolschaum 108', oder aus Foamglas, lokkerem oder geschäumten Recyclingmaterial oder dergleichen.

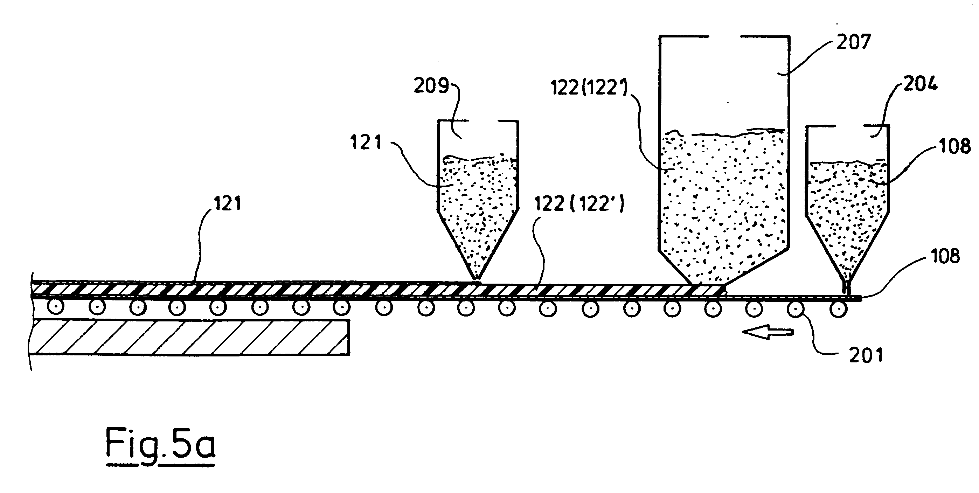

Um das Kernelement 101 herstellen zu können, wird, wie Figur 5a zeigt, auf eine Rollenbahn 201 mit einer flachen und glatten Unterlage eine Schicht Extruderschaum aus einer Extruderschaumvorrichtung 204 aufgebracht. Nach dem Abkühlen dieser Extruderschaumschicht 108 wird diese aus einer Mineralfaservorrichtung 207 mit einer Schicht Mineralfasern 122 oder Wolle 122' belegt. Dabei ist es möglich, daß die Mineralfasern 122 und/oder Wolle 122' durch Klopfen oder Walzen verdichtet werden. Hierdurch entsteht eine ebene und im wesentlichen gleichstarke Schicht aus Mineralfasern 122 und/oder Wolle 122'. Auf die Schicht 122 bzw. 122' wird aus einer weiteren Extruderschaumvorrichtung 209 wiederum eine Schicht Extruderschaum 121 aufgeschäumt. Das so fertiggestellte Kernelement 101 wird in Plattenform durch die Rollenbahn 201 einer weiteren Bearbeitung zugeführt.

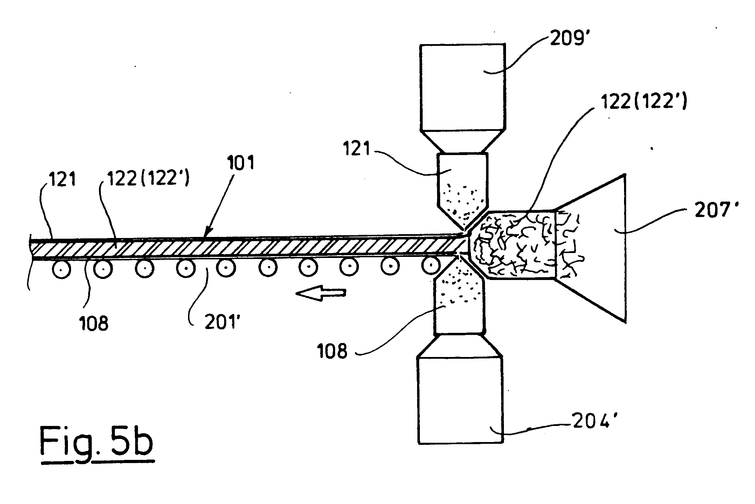

Möglich ist es natürlich auch, wie Fig. 5b zeigt, daß durch eine Mineralfaservorrichtung 207' die Mineralfasern 122 und/oder Wolle 122' in der Höhe und in der Breite so vorgeformt ausgegeben werden, daß eine im wesentlichen glatte, gleichhohe und gleichbreite Kernschicht aus Mineralfasern 122 und/oder Wolle 122' besteht. Dieses Kernelement 101 wird in dieser Form bereits einer weiteren Bearbeitung zugeführt.

Sind dabei wollartige Mineralfasern 122 und/oder tierische Wolle 122' verwendet worden, ist es möglich, daß in die nach außen tretenden einzelnen Fasern 122 bzw. 122' der von beiden Seiten aus den Extruderschaumvorrichtungen 204' und 209' kommende Extruderschaum 108 und 121 in dieses sehr lockere und faserige Gebilde aus Mineralfasern 122 und/oder Wolle 122' eindringt und in Abhängigkeit von deren Dichte und Festigkeit ein Kernelement 101 schafft, bei dem es zu einer innigen Vermischung von Mineralfasern 122 und/oder Wolle 122' mit Extruderschaum 108 und 121 kommt. Nach dem Abkühlen der Extruderschaumschichten 108 und 121 auf einer speziellen Rollenbahn 201' steht ein Kernelement 101 für eine weitere Bearbeitung zur Verfügung.

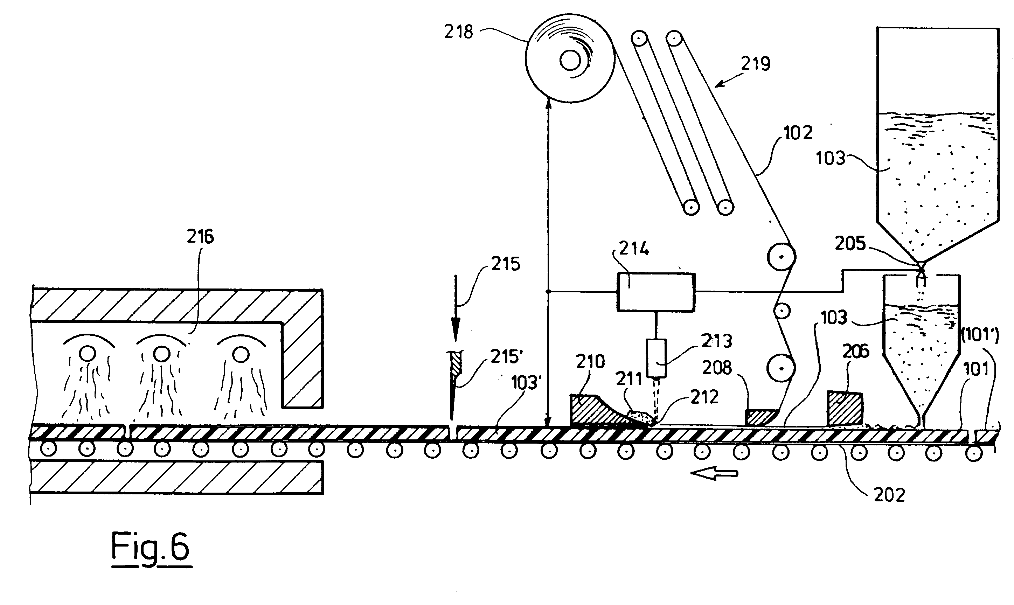

Dessen weitere Bearbeitung kann dabei kontinuierlich oder auch diskontinuierlich erfolgen, d. h. die in Figur 6 dargestellte Fertigungslinie schließt sich unmittelbar an die in den Figuren 5a und 5b dargestellten Fertigungslinien direkt an oder aber diese befinden sich an einer vollkommen anderen Stelle der Fertigungsstätte bzw. an einem anderen Fertigungsort.

Auf einer angetriebenen Rollenbahn 201 wird das horizontal liegende Kernelement 101 herangeführt. Das Kernelement hat dabei vorzugsweise eine Dicke von 5 - 50 mm haben. Ein Mörtel 103 ist in einem Mörtelsilo in einiger Entfernung von einer Mörtelaufbringvorrichtung angebracht. Zwischen beiden Vorrichtungen ist eine Dosiervorrichtung 205 geschaltet, die elektronisch graduiert zu steuern ist. Der sich in der Mörtelaufbringvorrichtung in fluidem Zustand befindende Mörtel 103 wird auf die zu beschichtende Seite des Kernelements 101 aufgebracht, und zwar in relativ grober Verteilung in drei oder vier Raupen. Diese Raupen werden durch einen Vergleichmäßiger 206 auf eine annähernd gleiche Schichtdicke, gegebenenfalls oberflächenstrukturiert, gebracht.

Nach dem Vergleichmäßiger 206 wird eine endlose Bahn aus Glasfasergewebe oder -vlies 102 oder einem anderen Material in praktisch spannungslosem Zustand, d. h. im wesentlichen aufgrund des Eigengewichtes und unter gleicher Geschwindigkeit wie die Transportgeschwindigkeit des Kernelementes 101, herangeführt. Auf einer Vorratsrolle 218 befindet sich ein Vorrat an Glasfasergewebe oder -vlies 102, der über einen Bahnspeicher 219 geführt wird, wie aus der Textiltechnik an sich bekannt ist. Die Bahn aus Glasfasergewebe oder -vlies 102 wird durch eine Andrückvorrichtung 208 in die Mörtelschicht 103 eingedrückt und eingebettet. Durch einen Abstreifer 210 wird der überschüssige Mörtel 103 abgestreift und in einer solchen Schicht verteilt, daß sie die Bahn 102 sowohl einbettet als auch leicht überragt, so daß die Bahn 102 anschließend eine Armierung im noch feuchten Mörtel 103 bildet.

Der sich vor dem Abstreifer 210 bildende Mörtelschwall 211 bildet als vordere Begrenzung eine Lippe 212, die mit Hilfe eines opto-elektronischen oder kapazitiven Fühlers 213 abgetastet wird. Erreicht die Lippe eine Stellung, die zu weit entfernt ist von dem Abstreifer 210, so wird das Fühlersignal vom Fühler 213 durch eine Datenverarbeitungsanlage 214 so ausgelegt, daß die Dosiervorrichtung 205 weiter geschlossen wird, so daß die zeitlich aus dem Behälter strömende Menge an Mörtel 103 abnimmt. Weicht die Lippe 212 zurück in Richtung Abstreifer 210, so läßt die EDV-Signalvorrichtung 214 die Dosiervorrichtung 205 wieder weiter öffnen und gibt weiter neue Mengen an Mörtel 103 frei. Nach dem Abstreifer 210 befindet sich demnach eine gleichmäßige Mörtelschicht 103 auf dem Kernelement 101.

Das Kernelement 101 gelangt nun in eine Schneidstation 215, wo ein Messer 215', Laserstrahl, Gurt oder dergleichen die noch feuchte Mörtelschicht und die Glasfaserarmierung durchschneidet, gegebenenfalls auch das Kernelement 101, und zwar im Bereich der Stöße bzw. in gewählten Abständen. Abschließend werden das Kernlement 101 und die aufgebrachte armierte Mörtelschicht 103 in einem Wärmeofen 216 getrocknet und ausgehärtet. Damit ist die armierte Mörtelschicht auf dem Kernelement 101 fest verankert. Das einseitig beschichtete Kernelement 101 kann in dieser Form bereits verwendet werden. Üblicherweise wird es jedoch beidseitig beschichtet. Es wird dazu wieder an den Anfang der Rollenbahn 201 gebracht und so gewendet, daß nunmehr die unbeschichtete Bahnseite oben liegt und dieselbe Prozedur durchgeführt werden kann, wie bereits beschrieben worden ist.

Als Mörtelmaterial eignen sich verschiedene, an sich bekannte Mixturen aus Zement, Wasser, Kunststoffanteilen (sogenannter Polymerbeton). Diese Mixturrezepte sind an sich bekannt. Die Dicke des Kernes ist relativ unkritisch. Sie kann zwischen wenigen Millimetern und einigen Zentimetern liegen. Dies hängt, wie bereits beschrieben, von dem jeweiligen Bedarf ab. Die Mörtelschicht wird üblicherweise möglichst sparsam angelegt. Es ist für eine ausreichende Einbettung des Glasfasergewebes oder -vlieses 102 zu sorgen. Anstelle des Glasfasergewebes oder -vlieses können auch andere Materialien, beispielsweise Aramid-Gewebe, Polyester-Vliese, metallische Gewebe oder dergleichen eingesetzt werden, wenn sie die erforderlichen Armierungseigenschaften erbringen. In gleicher Art und Weise kann ein Schaumstoffkern 101' versehen werden. Möglich ist es darüberhinaus auch, die einzelnen Mineralfaserelemente zu ummanteln oder zu imprägnieren. Durch Zusammenpressen dieser Fasern entsteht ohne sonstige Beschichtung eine Verbundplatte 110.

Ist der Verbundplattenabschnitt 110 hergestellt, wird er gemäß Figur 1 auf eine weitere Rollenbahn (nicht dargestellt) gelegt, auf der er weiterbefördert wird. Mittels eines kombinierten Fräs- und Schneidwerkzeuges (nicht dargestellt) werden, wie Fig. 2 zeigt, zwei Doppelstreifen 104, 105 mit einer Breite B1 bzw. B2 aus der Verbundplatte 110 geschnitten. Anstelle von zwei Doppelstreifen könnten auch drei und gegebenenfalls weitere gleichzeitig geschnitten und gefräst werden. Zu welchen Breiten die Doppelstreifen 104 bzw. 105 geschnitten bzw. gefräst oder gepreßt werden, hängt von den jeweiligen Einsatzbedingungen ab.

In den Doppelstreifen 104 wird außerdem eine V-förmige Nut 106 eingefräst, die einen Öffnungswinkel von 90° hat. Dabei wird sehr sorgfältig darauf geachten, daß die Frässpäne aus der V-Nut 106 durch Absaugen und Abblasen entfernt werden. Eine gleiche Nut kann auch anstelle der Trennung in die Streifen 104 und 105 oder aber auch in den Doppelstreifen 105 eingebracht werden.

Nachdem die Verbundplatte 110 Vollständig durch die Preß-, Fräs- und Schneidwerkzeuge hindurchgelaufen ist, gelangt sie an eine optische Abfühlstation 107. Diese Abfühlstation gibt ein Signal an eine entsprechende Steuerungsvorrichtung, so daß dann, wenn der Verbundplattenabschnitt jeweils die vollständige Länge durchlaufen hat, die Fräs- und Schneidwerkzeuge außer Eingriff sind.

Jetzt wird ein ansteuerbarer Anschlag 128 aus der Förderebene nach oben geklappt, der den Doppelstreifen 104 in der Nut 106 bricht. Die Nut 106 ist dabei so weit in das Kernelement 101 oder den Schaumstoffkern 101' eingebracht worden, daß sie diesen zwar vollständig durchstößt, aber die darunter bzw. davor liegende armierte Mörtelschicht 103' nicht durchtrennt. Dadurch ist es möglich, daß die Nutspitze überbrückende Armierung erhalten bleibt und so eine glatte, durchgängige und stabile äußere Oberfläche bilden kann. Der eine Verbundplattenstreifen 109 steht dann in einem rechten Winkel gegenüber dem anderen Verbundplattenstreifen 119, so daß sich eine L-Konfiguration gemäß Figur 3 ergibt.

Unmittelbar vor der Aufstellung zu der L-Konfiguration oder in dieser Konfiguration wird mit Hilfe eines Mundstückes 111 mit einer Ausgangstülle ein flüssiger Heißkleber in den Raum zwischen die Innenseiten der Nut 106 eingebracht. Der Heißkleber erhärtet unter Abkühlung. Bei dieser Abkühlung wird er noch durch zusätzliche Kühldüsen 112, die aus einem Begleitrohr 113, dem Umgebungsluft zugeführt wird, und das mit einzelnen, über die Länge verteilten Kühldüsen versehen ist, gekühlt. Nach Ablauf der Kühlstrecke ist der Heißkleber erhärtet und das Winkelhalbzeug gebrauchsfertig. Die Armierung 102 überbrückt die Nutspitze und bildet eine zusätzliche feste Verbindung zwischen den beiden Verbundplattenstreifen 109 und 119.

Aus dem so hergestellten Halbzeug kann durch Zusammenkleben zweier derartiger Halbzeuge ein geschlossenes Hohlprofil hergestellt werden. Durch Ankleben eines einzelnen Arm können auch Rohrkästen hergestellt werden. Es sei nicht ausgeschlossen, daß anstelle einer Abwinklung auch weitere Abwinklungen in einem anderen Winkel als 90° mit entsprechenden weiteren Fräs- und Anschlagvorrichtungen durchführbar sind. Hierdurch ist die Möglichkeit gegeben, auch abgewinkelte Wand- und Abblendkonfigurationen aus durchgehenden Winkelhalbzeugen aus Verbundplatten herzustellen.

## Patentansprüche

1. Verfahren zur Herstellung von Winkelhalbzeug aus Verbundwerkstoff-Platten, die aus einem relativ leicht zu bearbeitenden Kernelement (101), insbesondere einem Schaumstoffkern (101'), und aus wenigstens auf einer der Flachseiten aufgebrachten Faserarmierung, insbesondere aus Glasfasergewebe oder -vlies (102), die in einer ausgehärteten Mörtelschicht (103) eingebettet ist, bestehen, mit folgenden Verarbeitungsschritten:

a) ein rechteckiger Abschnitt (110) einer Verbundplatte der Breite ( B1 + B2 + ... ) wird mittels eines relativ zur Längserstreckung des Verbundplattenabschnittes beweglichen, kombinierten Fräs- und Schneidwerkzeuges in Doppelstreifen (104, 105) zu Breiten (B1, B2, ...) geschnitten, wobei gleichzeitig in wenigstens einen der Doppelstreifen eine V-förmige Nut (106) eingebracht wird, deren Nuttiefe die Faserarmierung ausspart, wobei zu beiden Seiten der Nut (106) je ein Verbundplattenstreifen (109, 119) entsteht,
b) anschließendes Brechen des mit der V-förmigen Nut (106) versehenen Doppelstreifens (104) in der Nut (106) unter Beibehaltung der die Nutspitze überbrückenden Armierung (102) und Aufstellen einer Γ-Konfiguration aus den beiden Plattenstreifen (109,119), wobei die Nutinnenseiten Gehrungsflächen werden,
c) Einbringen eines flüssigen Heißklebers in den Raum zwischen die Nutinnenseiten,
d) Abkühlenlassen des Klebers und Entnehmen des fertigen Winkelhalbzeugs.

2. Verfahren nach Anspruch 1, dadurch gekennzeichnet, daß die V-förmige Nut (106) einen Öffnungswinkel von 90° hat.

3. Verfahren nach einem der Ansprüche 1 oder 2, dadurch gekennzeichnet, daß der Verbundplattenabschnitt (110) auf einer Förderstrecke unter feststehenden Fräs- und Sägewerkzeugen gefördert wird.

4. Verfahren nach einem der Ansprüche 1 bis 3, dadurch gekennzeichnet, daß die Winkelhalbzeug-Rohlinge nach dem Auftrag des Klebstoffs entlang einer Förderstrecke mit Kühlluft angeblasen werden.

5. Verfahren nach einem der vorhergehenden Ansprüche, dadurch gekennzeichnet, daß zum Aufstellen der Γ-Konfiguration ein ansteuerbarer Anschlag (128) aus der Förderebene ausklappbar ist.

6. Verfahren nach Anspruch 5, dadurch gekennzeichnet, daß der Anschlag (128) mit einer Fühlvorrichtung (107) zusammenwirkt, die nach vollständigem Durchlauf des Verbundplattenabschnitts (110) durch die Fräs- und Sägevorrichtung das Aufstellen des Anschlags (128) auslöst.

7. Verfahren nach einem der vorhergehenden Ansprüche, dadurch gekennzeichnet, daß die Fräsund/oder Sägevorrichtung über die Breite des Verbundplattenabschnitts (110) verstellbar ist.

8. Verfahren nach einem der Ansprüche 1 bis 7, dadurch gekennzeichnet, daß das Halbzeugs zur Herstellung von Rohrkästen und geschlossenen Hohlprofilen verwendet wird.

9. Verfahren nach einem der Ansprüche 1 bis 8, dadurch gekennzeichnet, daß für das Kernelement (101) verdichtete Fasern, einschließlich Wolle (122'), Kugeln, Schnitzel, Streifen, Teilstücke oder dergleichen, aus organischen und/oder anorganischen Stoffen, z. B. Mineralfasern (122) verwendet wird.

10. Verfahren nach einem der Ansprüche 1 bis 9, dadurch gekennzeichnet, daß das Kernelement (101) aus verdichteten Fasern, einschließlich Wolle (102'), Kugeln, Schnitzeln, Streifen, Teilstücken oder dergleichen, aus organischen und/oder anorganischen Stoffen, z. B. Mineralfasern (122), mit Extruderschaum (108, 121) so beschichtet wird, daß der Extruderschaum (108, 121) mit den Fasern, Kugeln, Schnitzeln, Streifen, Teilstücken oder dergleichen aus organischen und/oder anorganischen Stoffen durchsetzt wird.

**Claims**

1. A method of producing angular semifinished products from boards of composite material comprising a relatively easily-worked core element (101), more particularly a foam core (101'), and at least one reinforcement of fibres applied to one of the flat sides, more particularly glass fibre fabric or matting (102) embedded in a hardened mortar layer (103), the processing steps being as follows:

   a) a rectangular portion (110) of a composite board having a width ( B1 + B2 + ... ) is cut by a combined milling and cutting tool movable relative to the longitudinal extension of the composite-board portion into double strips (104, 105) having widths (B1, B2, ...), and simultaneously a V-shaped groove (106) is formed in at least one of the double strips, the groove having a depth which avoids the fibre reinforcement, and a strip of composite board (109, 119) being formed on each side of the groove (106),

   b) next the double strip (104) formed with the V-shaped groove (106) is broken along the groove (106) while retaining the reinforcement (102) which bridges the bottom of the groove, and the two strips of board (101, 119) are erected to form an L shape, the insides of the groove becoming mitre surfaces,

   c) a liquid heat-sealing adhesive is introduced into the space between the inner sides of the groove, and

   d) the adhesive is left to cool and the finished angular semifinished product is taken out.

2. A method according to claim 1, characterised in that the V-shaped groove (106) has an opening angle of 90°.

3. A method according to claim 1 or 2, characterised in that the composite board portion (110) is conveyed along a conveying section under stationary milling and sawing tools.

4. A method according to any of claims 1 to 3, characterised in that cooling air is blown on to the angular semifinished blanks along a conveying section after the adhesive has been applied.

5. A method according to any of the preceding claims, characterised in that for the purpose of erecting to the L-shape, an actuatable abutment (128) can be swung out of the conveying plane.

6. A method according to claim 5, characterised in that the abutment (128) co-operates with a sensing device (107) which triggers the erection of the abutment (128) after the composite board portion (110) has run through the milling and sawing device.

7. A method according to any of the preceding claims, characterised in that the milling and/or sawing device is adjustable across the width of the composite board portion (110).

8. A method according to any of claims 1 to 7, chracterised in that the semifinished product is used for producing tubular boxes and closed hollow profiles.

9. A method according to any of claims 1 to 8, characterised in that the core element (101) is made of compacted fibres including wool (122'), balls, chips, strips, parts or the like of organic and/or inorganic materials, e.g. mineral fibres (122).

10. A method according to any of claims 1 to 9, characterised in that the core element made of compacted fibres, including wool (102'), balls, chips, strips, parts or the like of organic and/or inorganic substances, e.g. mineral fibres (122), is so coated with extruder foam (108, 121) that the fibres, balls, chips, strips, parts or the like of organic and/or inorganic materials are interspersed in the extruder foam (108, 121).

## Revendications

1. Procédé de fabrication de demi-produits angulaires en plaques de matériaux composites qui se composent d'un élément de noyau (101) relativement facile à travailler, en particulier d'un élément de noyau (101') en mousse, et d'une armature fibreuse appliquée au moins sur l'un des côtés plats, en particulier en tissu ou en non-tissé (102) de fibres de verre, qui est enrobée dans une couche de mortier durci, comprenant les étapes consistant à:

a) couper une partie rectangulaire (110) d'une plaque de composite de la largeur (B1 + B2 + ... ) en bandes doubles (104, 105) de largeurs (B1, B2, ...) au moyen d'un outil combiné de fraisage et de coupe mobile relativement à l'extension longitudinale de la partie de plaque de composite, une encoche en forme de V (106) dont la profondeur d'encoche ménage l'armature fibreuse étant simultanément ménagée dans au moins l'une des bandes doubles, une bande (109, 119) de plaque de composite étant formée sur les deux côtés de l'encoche (106),

b) rompre ensuite dans l'encoche (106) la bande double (104) qui comporte l'encoche en forme de V (106) en maintenant l'armature (102) qui chevauche la pointe de l'encoche et agencer une configuration en Γ à partir des deux bandes (109, 119) de plaque, les côtés intérieurs de l'encoche devenant des surfaces d'onglets,

c) introduire une colle à chaud liquide dans l'espace compris entre les côtés intérieurs de l'encoche,

d) laisser refroidir la colle et enlever le demi-produit angulaire fini.

2. Procédé selon la revendication 1, caractérisé en ce que l'angle d'ouverture de l'encoche (106) en forme de V est de 90°.

3. Procédé selon la revendication 1 ou 2, caractérisé en ce que la partie (110) de plaque de composite est transportée sur un parcours de transport audessous d'outils fixes de fraisage et de sciage.

4. Procédé selon l'une des revendications 1 à 3, caractérisé en ce que les ébauches de demi-produits angulaires sont soumises, après l'application de l'adhésif, à un soufflage d'air froid le long du parcours de transport.

5. Procédé selon l'une des revendications précédentes, caractérisé en ce qu'une butée réglable (128) peut être basculée hors du plan de transport pour agencer la configuration en Γ.

6. Procédé selon la revendication 5, caractérisé en ce que la butée (128) coopère avec un dispositif détecteur (107) qui déclenche l'agencement de la butée (128) lorsque la partie (110) de plaque de composite a terminé son parcours à travers le dispositif de fraisage et de sciage.

7. Procédé selon l'une des revendications précédentes, caractérisé en ce que le dispositif de fraisage et/ou de sciage est mobile sur la largeur de la partie (110) de plaque de composite.

8. Procédé selon l'une des revendications 1 à 7, caractérisé en ce que le demi-produit est utilisé pour la fabrication de caissons tubulaires et de profils creux fermés.

9. Procédé selon l'une des revendications 1 à 8, caractérisé en ce que l'on emploie, pour l'élément de noyau (101) des fibres comprimées, y compris de la laine (122'), des billes, des copeaux, des bandes, des fragments ou similaires en matières organiques et/ou inorganiques, par exemple des libres minérales (122).

10. Procédé selon l'une des revendications 1 à 9, caractérisé en ce que l'élément de noyau (101) en libres comprimées, y compris de la laine (102'), des billes, des copeaux, des bandes, des fragments ou similaires en matières organiques et/ou inorganiques, par exemple des libres minérales (122), est revêtu d'une mousse d'extrusion (108, 121) d'une manière telle que la mousse d'extrusion (108, 121) contient les libres, billes, copeaux, bandes, fragments ou similaires en matières organiques et/ou inorganiques.

Fig.1

Fig.3

Fig.2

EP 0 595 287 B1

Fig. 4a

Fig. 4 b

Fig.5a

Fig. 5b

Fig.6